# EUROPEAN PATENT APPLICATION

(11) **EP 3 761 229 A1**
(43) Date of publication of application: **06.01.2021**
(21) Application number: 19758088.9
(22) Date of filing: 22.02.2019
(51) Int. Cl.: G06K 9/20

(54) **DIGITAL TECHNOLOGY FOR CULTURAL RELICS, CALLIGRAPHY AND ORIGINAL PRODUCTS**

(30) Priority: 26.02.2018 CN 201810158625
(71) Applicant: Liu, Fenghua, Guiyang, Guizhou 550025 (CN)
(72) Inventor: Liu, Fenghua, Guiyang, Guizhou 550025 (CN)
(74) Representative: Vitina, Maruta
(86) International application number: PCT/CN2019/000033
(87) International publication number: WO 2019/161712

(57) **Abstract**

The present invention is related to a digitalization technology method of cultural relics, calligraphy, painting and original commodities. The method utilizes electromagnetic waves in a wavelength range of 750nm-100Mm to irradiate object individuals to extract three-dimensional surface-interior reflected waves representing electromagnetic structure characteristics of atom-molecular clusters, and converts the three-dimensional exterior-interior reflected waves to specific identity identification codes through analog-digital conversion. The identity identification codes can be used for preventing fakes in the commodity transaction and can also be used for identification, positioning, speed measurement, early warning, collection protection, resource evaluation, disaster prevention and reduction and national security day and night under any weather conditions.

## Description

### TECHNICAL FIELD

A claimed technical solution belongs to the field of object identification.

### BACKGROUND OF THE PRESENT INVENTION

When irradiating objects, visible light electromagnetic waves may produce physical phenomena such as reflection, scattering, refraction, absorption and transmission, reflected waves and scattered waves of the visible light are generally used to extract electromagnetic characteristic information of the object surface. The data cluster generated by the analog-digital conversion of the reflected waves and the scattered waves can represent electromagnetic structure characteristics of the object surface. Therefore, the visible light reflected wave and scattered wave technology can technically digitalize the characteristics of the object surface.

### SUMMARY OF THE PRESENT INVENTION

The digitalization of three-dimensional exterior-interior electromagnetic structure characteristics of objects such as cultural relics, calligraphy, paintings, and original commodities is a technical problem to be solved by the present invention. Pottery, jade, gold, silver, bronze and other cultural relics inherit the history, culture, aesthetics, emotion, custom, craft, technology, science, worship and belief of the country, ethnic and society, most of the precious cultural relics that have existed for thousands of years are provided for visitors in museums and historical sites. Some cultural relics become private collections through commercial transactions. The handmade cultural relics are different from each other theoretically, and the cultural relics which located in different physical and biochemical spaces and changed with time are different at the atom-molecular levels. Calligraphy, ink painting, oil painting, carving, sculpture and other artworks show rich and colorful personalities due to creative elements such as authors, materials, techniques, styles, appearance and artistic conception. Some famous works handed down from ancient times have caused a sensation in the world art auction market because of high-priced commercial transactions of tens of millions dollars. The famous works can be counterfeited by simulating materials, techniques, brightness, shade and colors to realize the surface similarity and spirit similarity, but it is impossible to realize the counterfeiting at the surface-interior three-dimensional atom-molecular levels. The annual trading volume of object commodities such as agricultural products and industrial products in the world is in a unit of tens of billions. Due to the differences in labor, raw materials, production processes and manufacturing processes, each object commodity is different at the atom-molecular level. According to the technical solution of the present invention, electromagnetic waves with longer wavelength comparing with visible light are used to irradiate objects such as cultural relics, calligraphy, paintings and original commodities to obtain reflected waves as three-dimensional surface-interior electromagnetic wave identification information. Although pottery, jade, gold, silver, bronze, calligraphy, ink painting, oil painting, carving, sculpture, agricultural product, industrial product, vehicle, ship, submarine, aircraft, mountain, volcano, river, sea, lake, bridge and building are diverse in colors and shapes, but all object individuals are composed of different astronomical atom-molecular clusters. Nucleon and electron particles as free charges and bound charges of atom-molecule clusters which can interact with electric fields are different in types, distributions and quantities in the atom-molecular three-dimensional cluster of object individual. The magnetic fields interaction media of diamagnetic, paramagnetic, ferromagnetic, ferrimagnetic and antiferromagnetic atom-molecular cluster determined by electron orbital magnetic moment and nucleon-electron spin magnetic moment are different in types, distributions and quantities in the atom-molecular three-dimensional cluster of each object. The cultural relics, calligraphy, paintings and original commodities can be made of raw materials of insulators, semiconductors or conductors, and the penetration depths of electromagnetic waves with different wavelengths to the materials with different electric conductivity are different. The reflected waves, scattered waves, refracted waves, absorbed waves or transmitted waves obtained by irradiating object individuals with electromagnetic waves in a wavelength range of 750nm-100Mm covering infrared waves, terahertz waves, millimeter waves, centimeter waves, decimeter waves, meter waves, radio frequency waves and low frequency waves can represent the electron and nucleon electromagnetic structure characteristics of astronomical atom-molecular clusters to realize identity identification. Generally, data clusters generated by the analog-digital conversion of the reflected waves are used as identity identification codes of the object individuals, and the object individuals such as the cultural relics, calligraphy, painting and original commodities can be identified by comparing the data clusters. At present, the commonly used object identity identification technologies include eye identification, photo, signature, seal, trademark and bar code, which are dependent on color images of the visible light. The electromagnetic information extraction depth of the reflected waves and scattered waves of the visible light at the object interface is less than 750nm due to the restriction of the wavelength. The electromagnetic information extraction depth of the electromagnetic waves with the wavelength range of 750nm-100Mm at the object interface is remarkably deeper than that of the visible light because of the longer wavelength. For the object individuals composed of the insulator, semiconductor or conductor, the present invention can utilize the electromagnetic waves in different wavebands in a wavelength range of 750nm-100Mm to extract the surface-interior three-dimensional electromagnetic reflected waves as the identity identification information. The counterfeiting of the surface color of an object original is technically feasible and low in cost, but the counterfeiting of the electromagnetic structures of three-dimensional exterior-interior atom-molecular clusters of the object original is technically infeasible no matter how much it costs. The present invention can extract the three-dimensional surface-interior electromagnetic reflected waves to serve as the identity identification codes after the analog-digital conversion, so fakes of the cultural relics, calligraphy, painting and original commodities are impossible to sell. Therefore, compared with the eye identification, photo, signature, seal, trademark and barcode depending on the visible light, the present invention is technically advanced obviously.

### DETAILED DESCRIPTION OF THE PRESENT INVENTION

In a three-dimensional coordinate system, according to the volume of an object and electric conductivity of constituent materials, the suitable distance and angles are selected, and electromagnetic waves of suitable single wavelength, multiple wavelengths, narrow waveband and broad waveband in a wavelength range of 750nm-100Mm are used as detection electromagnetic waves to irradiate the object original to extract reflected wave information which can be converted to identity identification codes through analog-digital conversion. An identity identification database of target objects such as cultural relics, calligraphy, painting and original commodities can be established according to the requirements of National Standardization Administration of China and International Organization of Standardization. The annual transaction amount of the object commodities such as cultural relics, calligraphy, paintings and original commodities in global stores and internet commerce is in the unit of ten billions. Rampant fakes substantially harm the interests of original authors, producers, brands and consumers, and in the meantime fakes ruin the original spirit of society, honest labor and mutual trust in transactions. However, it is impossible to technically realize atom-molecular three-dimensional clusters of the fakes to be the same in types, distributions and quantities as the atom-molecular three-dimensional clusters of object originals. The electromagnetic waves in a wavelength range of 750nm-100Mm is used to irradiate the object, and the extracted reflected waves can digitalize the electron and nucleon electromagnetic structure characteristics of the atomic and molecular three-dimensional clusters. The identity identification code of the reflected waves can fully expose the fakes and make the fakes sell impossible. The identity identification code representing the irreproducible electromagnetic structure characteristics of the three-dimensional surface-interior atomic and molecular clusters may accelerate the commercial transaction of the medium-and-high-end and ultrahigh-end object originals. On the premise of ensuring the accuracy, authority and safety of the identity identification codes of the object, consumers can use mobile phones to transmit the identity identification codes of commodities and compare the codes with independent originators, national standard databases and international standard databases in a few seconds to confirm whether they are genuine product originals. In the time of rapid digital economy development, the identity identification code proposed by the present invention can provide fundamental technical support for the object transaction. According to the volume and electric conductivity of targets, the electromagnetic waves in corresponding wave bands of 750nm-100Mm can be selected at the sites of indoor, land, ocean, sky and space to irradiate various targets such as cultural relics, artworks, vehicles, ships, submarines, aircrafts, mountains, volcanoes, rivers, seas, lakes, bridges and buildings to extract the three-dimensional surface-interior electromagnetic reflected waves that are converted to identity identification codes through analog-digital conversion. The visible light identification technology is seriously interfered by rain, snow and fog due to the wavelength, while the electromagnetic waves in the waveband of 750nm-100Mm can be better resistant to rain, snow and fog due to longer wavelength and identify the targets day and night. Through the integrated application of the electromagnetic waves, sensors, internets, computer clusters, softwares, cloud computing, artificial intelligence, mobile phones and human intelligence, the present invention can automatically identify important targets in sea, land and air and can be applied to positioning, monitoring, speed measurement, early warning, collection protection, resource evaluation, dynamic change, disaster prevention and reduction, scientific research and national security to gradually complete the digital construction of the earth.

## Claims

1. Preamble portion: a subject title of the claimed invention is "a digital technology of cultural relics, calligraphy, painting, and original commodities"; the closest current technology is the two-dimensional plane identification technology of visible light photography; and the common feature of the present invention and the two-dimensional plane identification technology of visible light photography is using electromagnetic waves that travel approximately at the light speed in the air as detection tools.

2. Feature portion: the object information extracted by visible light photography in the closest current technology is the two-dimensional plane data cluster, and the photography identification technology with the visible light in a wavelength range of 350nm-750nm is seriously interfered by the rain, snow and fog due to the wavelength; although pottery, jade, gold, silver, bronze, calligraphy, ink painting, oil painting, carving, sculpture, agricultural product, industrial product, vehicle, ship, aircraft, mountain, river, sea, bridge, building and other objects are diverse in colors and shapes, but all objects are different astronomical three-dimensional atom-molecular clusters; with regard too bject individuals made of insulator, semiconductor or conductor, the present invention can utilize the electromagnetic waves in a wavelength range of 750nm-100Mm to extract three-dimensional surface-interior reflected waves representing electron and neutron electromagnetic structure characteristics of atomic and molecular three-dimensional clusters, and then can convert the three-dimensional surface-interior reflected waves to specific identity identification codes through analog-digital conversion; the object information extracted by the visible light photography technology is two-dimensional plane data, while the object information extracted by the present invention is three-dimensional surface-interior data; because the visible light is restricted by the wavelength range of 350nm-750nm, the electromagnetic information extraction depth of reflected waves and scattered waves at an object interface is less than 750nm, while the electromagnetic information extraction depth of the electromagnetic waves in the wavelength range of 750nm-100Mm at the object interface is apparently deeper than that of the visible light due to longer wavelength; due to the longer wavelength, the electromagnetic waves in the wavelength range of 750nm-100Mm with higher resistance to rain, snow and fog can extract the electromagnetic structure characteristic information day and night under any weather conditions for identification; different from the visible light photography two-dimensional plane identification technology, the advanced technical characteristics of the present invention such as three-dimensional surface-interior penetration detection capability, specific identity identification codes and resistance to the interference of rain, snow and fog are based on relevant physical and chemical electromagnetic scientific theories; since each object individual is a different astronomical three-dimensional atom-molecular cluster, the technical scope claimed by the present invention is to limit the application of electromagnetic waves of single wavelength, multiple wavelengths, narrow waveband or broad waveband in the wavelength range of 750nm-100Mm meters as detection electromagnetic waves to irradiate various object individuals to extract reflected waves, scattered waves, refracted waves, absorption waves or transmitted waves which can be used as the specific electromagnetic waves identity identification information of the irradiated object individual to represent the specific three-dimensional exterior-interior electromagnetic structure characteristics of the object individual .

## Amended claims

### Amended claims under Art. 19.1 PCT

1. Preamble portion: a subject title of the claimed invention is "a digital technology of cultural relics, calligraphy, painting, and original commodities"; the closest prior art is the two-dimensional plane identification technology of visible light photography; and the common feature of the present invention and the two-dimensional plane identification technology of visible light photography is using electromagnetic waves that travel approximately at a light speed in the air as detection tools.

2. Feature portion: the object information extracted by visible light photography in the closest prior art is a two-dimensional plane data cluster, and the photography identification technology with the visible light in a wavelength range of 350nm-750nm is seriously susceptible to the interference of the rain, snow and fog weathers due to the wavelength; although pottery, jade, gold, silver, bronze, calligraphy, ink paintings, oil paintings, seal cutting, sculpture, agricultural products, industrial products, vehicles, ships, aircraft, mountains, rivers, seas, bridges and buildings and other objects are diversified in colors and shapes, but have different astronomical three-dimensional atomic and molecular clusters; for object individuals made of insulators, semiconductors or conductors, the present invention can utilize the electromagnetic waves in a wavelength range of 30µm-100million meters to extract three-dimensional exterior-interior reflected waves representing electron and neutron electromagnetic structural characteristics of atomic and molecular three-dimensional clusters, and then can change the three-dimensional exterior-interior reflected waves to specific identity identification codes through analog-to-digital conversion; the object information extracted by the visible light photography technology is two-dimensional plane data, while the object information extracted by the present invention is three-dimensional exterior-interior three-dimensional data; the visible light in the wavelength range of 350nm-750nm is restricted by the wavelength, so that an electromagnetic information extraction depth of reflected waves and scattered waves at an object interface is less than 750nm, while the electromagnetic information extraction depth of the electromagnetic waves in the wavelength range of 30µm-100million meters at the object interface is apparently greater than that of the visible light due to longer wavelength; because of the longer wavelength, the electromagnetic waves in the wavelength range of 30µm-100million meters with higher resistance to rain, snow and fog can extract the electromagnetic structural characteristic information day and night under any weather conditions for identification; different from the visible light photography two-dimensional plane identification technology, the advanced technical characteristics of the present invention such as three-dimensional exterior-interior penetration detection capability, specific identity identification codes and resistance to the interference of rain, snow and fog are based on relevant physical and chemical electromagnetic scientific theories; since each object individual is a different astronomical three-dimensional atomic and molecular cluster, the technical scope claimed by the present invention is to limit the application of electromagnetic waves with a single wavelength, multiple wavelengths or broadband and narrow band in the wavelength range of 30µm-100million meters as detection electromagnetic waves to irradiate various object individuals to extract reflected waves, scattered waves, refracted waves, absorption waves or transmitted waves so as to represent three-dimensional exterior-interior electromagnetic structural characteristics which are used as the specific electromagnetic identity identification information of individuals.
